# EUROPÄISCHE PATENTSCHRIFT

(11) **EP 2 739 385 B1**
(45) Veröffentlichungstag und Bekanntmachung des Hinweises auf die Patenterteilung: **28.08.2019**
(21) Anmeldenummer: 12729578.0
(22) Anmeldetag: 21.06.2012
(51) Int. Cl.: B01J 13/00

(54) **VERFAHREN ZUR HERSTELLUNG EINER STABILEN DISPERSION VON NANOPARTIKELN, HERGESTELLTE DISPERSION UND DEREN VERWENDUNG**
METHOD FOR PRODUCING A STABLE DISPERSION OF NANOPARTICLES, DISPERSION PRODUCED, AND USE THEREOF
PROCÉDÉ DE FABRICATION D'UNE DISPERSION STABLE DE NANOPARTICULES, DISPERSION OBTENUE ET SON UTILISATION

(30) Priorität: 04.08.2011 DE 102011052396
(43) Veröffentlichungstag der Anmeldung: 11.06.2014
(73) Patentinhaber: Gelita AG, 69412 Eberbach (DE)
(72) Erfinder: RAAB, Alexander, 69239 Neckarsteinach (DE); REIHMANN, Matthias, 69502 Hemsbach (DE); SIMON, Christoph, 69412 Eberbach (DE)
(74) Vertreter: Hoeger, Stellrecht & Partner Patentanwälte mbB
(86) Internationale Anmeldenummer: PCT/EP2012/061939
(87) Internationale Veröffentlichungsnummer: WO 2013/017333

(56) Entgegenhaltungen:
- WO-A1-93/10761
- WO-A1-93/10766
- DE-A1- 4 140 195
- DE-A1- 19 930 335
- DE-A1-102006 055 439
- US-A- 5 560 924
- US-A- 5 932 245

## Beschreibung

Die vorliegende Erfindung betrifft ein Verfahren zur Herstellung einer stabilen Dispersion von Nanopartikeln aus anorganischen Materialien.

Die Erfindung betrifft ferner eine stabile Dispersion von Nanopartikeln sowie deren Verwendung.

Nanopartikel weisen bemerkenswerte physikalische und optische Eigenschaften auf, die für eine Vielzahl unterschiedlicher Anwendungen ausgenutzt werden können. Nanopartikel aus Titandioxid werden z.B. eingesetzt zur Erzielung spezieller optischer Effekte in Farben, Lacken und Beschichtungen, als Additive für Kunststoffe, als UV-Filter in Sonnenschutzmitteln, in Leuchtdioden, Flüssigkristallanzeigen und Solarzellen oder für die Herstellung von schmutzabweisenden bzw. selbstreinigenden Oberflächen durch die Ausnutzung eines photokatalytischen Effekts. Nanopartikel aus Siliziumdioxid werden u.a. bei Inkjet-Photopapieren eingesetzt und zur Verbesserung der Kratzfestigkeit von Lacken, Nanopartikel aus Aluminiumoxid zur Beschichtung von optischen Linsen, Scheiben und Scheinwerfern z.B. im Automobilbereich, sowie Nanopartikel aus Zinkoxid als UV-Filter in Sonnenschutzmitteln.

Eine notwendige Voraussetzung, um die speziellen Eigenschaften der Nanopartikel ausnutzen zu können, ist in den allermeisten Fällen die Bereitstellung einer stabilen Dispersion der Nanopartikel, d.h. deren dauerhafte gleichmäßige Verteilung in einem flüssigen oder festen Medium ohne dass die Nanopartikel koagulieren. Es sind zwar bereits Verfahren zur Stabilisierung derartiger Dispersionen bekannt (z.B. eine genaue Einstellung des optimalen pH-Wertes oder die Zugabe von Komplexbildnern oder sterischen Stabilisatoren), keiner dieser Ansätze liefert jedoch in vollem Umfang befriedigende Ergebnisse. Insbesondere ist es problematisch, eine Stabilisierung der Dispersion innerhalb eines breiten Temperaturbereichs (z.B. von -18 °C bis 80 °C) zu erreichen.

Die US 5,560,924 offenbart Medikamente mit sofortiger Wirkung, die ein pharmakologisch aktives Derivat von 2-Arylpropionsäure als ein pharmazeutisch applizierbares Nanosol enthalten. Das Nanosol wird durch eine Gelatine stabilisiert, deren isoelektrischer Punkt so ausgewählt ist, dass die Ladung der Wirkstoffpartikel neutralisiert wird.

Die WO 93/10766 beschreibt ein Akut-Arzneimittel enthaltend Flurbiprofen neben üblichen pharmazeutischen Trägern und Hilfsstoffen. Das Flurbiprofen liegt in Form eines pharmazeutisch applizierbaren Nanosols vor, das als Träger im Wesentlichen Gelatine, ein Kollagenhydrolysat oder ein Gelatinederivat enthält.

Die US 5,932,245 offenbart Nanosole und Verfahren zu ihrer Herstellung, welche es ermöglichen, disperse Lösungen von kaum wasserlöslichen Wirkstoffen durch Gelatine oder deren Derivate zu stabilisieren. Um die Ladung des Systems, das aus Partikeln der aktiven Substanz und Gelatine besteht, zu neutralisieren, wird die Oberflächenladung der Partikel durch eine entsprechende entgegengesetzte Ladung der Gelatinemoleküle kompensiert.

Der Erfindung liegt die Aufgabe zugrunde, ein verbessertes und einfach durchzuführendes Verfahren zur Herstellung einer stabilen Dispersion von Nanopartikeln vorzuschlagen.

Ferner liegt der Erfindung die Aufgabe zugrunde, eine stabile Dispersion von Nanopartikeln zur Verfügung zu stellen.

Hinsichtlich des Verfahrens wird diese Aufgabe erfindungsgemäß durch die folgenden Schritte gelöst, die in dieser Reihenfolge durchgeführt werden:
a) Mischen einer wässrigen Suspension von Nanopartikeln aus einem anorganischen Material mit einer wässrigen Lösung von Gelatinehydrolysat; und
b) Hinzufügen einer wässrigen Lösung von Gelatine zu der Mischung.

Eine stabile Dispersion von Nanopartikeln ist im Rahmen der vorliegenden Erfindung eine Dispersion, bei der - zumindest innerhalb eines vorgegebenen Temperaturbereichs - keine Koagulation der Nanopartikel erfolgt.

Die Verwendung von Gelatine als Matrix zur Herstellung von Dispersionen ist prinzipiell bekannt, u.a. wird Gelatine bereits seit langer Zeit für die Beschichtung von photographischen Filmen eingesetzt. Es hat sich jedoch gezeigt, dass eine stabile Dispersion von Nanopartikeln allein mit Gelatine nicht hergestellt werden kann, vielmehr kommt es häufig zu einer Wechselwirkung zwischen der Gelatine und den Nanopartikeln, die zu deren sofortiger Koagulation führt, oder die Gelatine wird durch diese starke Wechselwirkung vernetzt.

Überraschenderweise wurde von den Erfindern festgestellt, dass dieses Problem vermieden werden kann, wenn vor dem Inkontaktbringen der Nanopartikel mit der Gelatine ein Mischen der in Wasser suspendierten Nanopartikel mit einer wässrigen Lösung von Gelatinehydrolysat gemäß Schritt a) des erfindungsgemäßen Verfahrens erfolgt. Anschließend kann dann die Lösung der Gelatine gemäß Schritt b) hinzugefügt werden, wobei eine stabile Dispersion resultiert, die für verschiedene Zwecke vorteilhaft verwendet werden kann. Offensichtlich wirkt das Gelatinehydrolysat der ungünstigen Wechselwirkung zwischen den Nanopartikeln und der Gelatine entgegen, indem es die Suspension der Nanopartikel durch sterische und/oder elektrostatische Effekte stabilisiert und dadurch eine unerwünschte Vernetzung der Gelatine verhindert.

Für die Unterscheidung zwischen Gelatine und Gelatinehydrolysat ist das Gelbildungsvermögen von Gelatine entscheidend, d.h. eine wässrige Gelatinelösung geht unterhalb einer bestimmten Temperatur in einen Gelzustand über, was bei Gelatinehydrolysat aufgrund von dessen niedrigerem Molekulargewicht nicht der Fall ist.

Bevorzugt weist das in dem erfindungsgemäßen Verfahren eingesetzte Gelatinehydrolysat ein mittleres Molekulargewicht von ca. 500 bis ca. 9.000 Da auf, weiter bevorzugt von ca. 2.500 bis ca. 5.000 Da.

Das Gelatinehydrolysat kann durch chemische (d.h. saure oder alkalische) Hydrolyse oder durch enzymatische Hydrolyse mittels Proteasen aus Gelatine hergestellt werden, oder alternativ auch durch die unmittelbare Hydrolyse von Kollagen, wobei Gelatine dann nur als nicht isoliertes Zwischenprodukt gebildet wird.

Die in Schritt b) des Verfahrens eingesetzte Gelatine weist günstigerweise ein mittleres Molekulargewicht von mindestens 20.000 Da auf. Die Gelfestigkeit der Gelatine liegt bevorzugt bei ca. 200 bis ca. 320 g Bloom, wobei diese in Abhängigkeit von der vorgesehenen Verwendung der hergestellten Suspension variiert werden kann.

Sowohl die Gelatine als auch das Gelatinehydrolysat, die bei dem erfindungsgemäßen Verfahren eingesetzt werden, können aus dem Bindegewebe oder aus Knochen von verschiedenen Tierarten gewonnen werden, insbesondere aus der Haut oder den Knochen von Schweinen oder Rindern, oder auch von Geflügel oder Fischen.

Vorzugsweise wird der Schritt b) des erfindungsgemäßen Verfahrens bei einer Temperatur von ca. 40 °C bis ca. 60 °C durchgeführt. Bei diesen Temperaturen ist in der Regel auch eine wässrige Lösung von sehr hochviskoser Gelatine flüssig bzw. ausreichend fließfähig, um mit der in Schritt a) erhaltenen Mischung zu einer homogenen Gesamtmischung verarbeitet werden zu können. Besonders günstig ist es, wenn nicht nur die wässrige Lösung von Gelatine eine Temperatur von ca. 40 °C bis ca. 60 °C aufweist, sondern wenn auch die Mischung der Suspension von Nanopartikeln mit der wässrigen Lösung von Gelatinehydrolysat vor dem Hinzufügen der Gelatine auf die entsprechende Temperatur erwärmt wird, um lokale Temperaturunterschiede beim Hinzufügen der Gelatinelösung und eine zu schnelle Abkühlung und Gelbildung der Gelatine zu vermeiden. Der Schritt a) kann hingegen bei einer niedrigeren Temperatur (insbesondere bei Raumtemperatur) durchgeführt werden.

Das erfindungsgemäße Verfahren umfasst insbesondere als weiteren Schritt c) das Abkühlenlassen der in Schritt b) erhaltenen Mischung. Beim Abkühlen geht die zunächst flüssige Dispersion der Nanopartikel in eine Dispersion im Gelzustand über, bei der die Nanopartikel gleichmäßig in einer Matrix des Gelatinegels verteilt sind und ihre Koagulation insbesondere durch das Vorhandensein des Gelatinehydrolysats verhindert wird. Als Ergebnis des erfindungsgemäßen Verfahrens liegt somit eine stabile, gelförmige Dispersion der Nanopartikel vor. Die Temperatur, unterhalb der die Gelatinelösung in ein Gelatinegel übergeht, ist dabei von der Viskosität bzw. Gelfestigkeit der eingesetzten Gelatine abhängig und kann durch deren Auswahl innerhalb eines gewissen Bereichs eingestellt werden.

Wie bereits oben angesprochen, beruht das erfindungsgemäße Verfahren zumindest teilweise auf einer elektrostatischen Stabilisierung der Nanopartikel in der wässrigen Suspension durch das Gelatinehydrolysat. Besonders vorteilhaft ist es daher, wenn der isoelektrische Punkt des Gelatinehydrolysats so gewählt ist, dass der Betrag des Zeta-Potentials der Nanopartikel durch das Mischen gemäß Schritt a) erhöht wird, d.h. die elektrostatischen Abstoßungskräfte zwischen den Partikeln werden verstärkt und dadurch die Tendenz zur Koagulation verringert. Bei dem erfindungsgemäßen Verfahren wird somit im Wesentlichen der gegenteilige Effekt wie bei einer Koazervation bewirkt.

Der isoelektrische Punkt (IEP) von Gelatinehydrolysat ist in erster Linie davon abhängig, ob das Hydrolysat aus Gelatine vom Typ A oder vom Typ B hergestellt wird bzw. ob ein sauerer Aufschluss (Typ A) oder ein alkalischer Aufschluss (Typ B) des Kollagens erfolgt ist. Generell haben Gelatinehydrolysate vom Typ A einen höheren IEP als Gelatinehydrolysate vom Typ B, d.h. sie weisen (bei jeweils gleichem pH-Wert) einen höheren Überschuss an positiven Ladungen in Form von NH₃⁺-Gruppen auf. In dem häufigen Fall, dass die Nanopartikel ein positives Zeta-Potential aufweisen, ist es daher bevorzugt, wenn das in Schritt a) eingesetzte Gelatinehydrolysat ein Gelatinehydrolysat vom Typ A ist. Die sich an ein Nanopartikel anlagernden Hydrolysatmoleküle verstärken dann dessen positive Gesamtladung und schirmen es von anderen Nanopartikeln ab, wobei auch ein sterischer Effekt hinzutritt.

In dem Fall, dass die Nanopartikel bereits ein sehr hohes (positives) Zeta-Potential aufweisen, kann auch mit einem Gelatinehydrolysat vom Typ B eine ausreichende Stabilisierung erreicht werden.

Der IEP der in Schritt b) eingesetzten Gelatine wird vorzugsweise so gewählt, dass dadurch eine möglichst geringe weitere Beeinflussung der Ladungsverhältnisse erfolgt. Vorzugsweise ist daher der IEP der Gelatine kleiner oder gleich dem IEP des Gelatinehydrolysats.

Insbesondere, wenn im Schritt a) ein Gelatinehydrolysat vom Typ A eingesetzt wurde, ist es bevorzugt, wenn die Gelatine eine Gelatine vom Typ A ist oder eine Mischung von Gelatinen der Typen A und B umfasst, wobei die Gelatine bzw. Mischung einen IEP von 6 bis 10 aufweist, bevorzugt von 7 bis 9.

Es hat sich ferner gezeigt, dass bei einem höheren isoelektrischen Punkt die Gelierung der Dispersion bereits bei einer Temperatur im Bereich von 60 °C, d.h. unmittelbar nach dem Hinzufügen der wässrigen Lösung von Gelatine in Schritt b), einsetzen kann, während bei einem niedrigeren isoelektrischen Punkt die Dispersion zunächst flüssig bleibt und erst beim Abkühlen fest wird. Beide Fälle können je nach Verwendung der Dispersion vorteilhaft sein.

Wenn eine Gelatine vom Typ B eingesetzt wird, weist diese bevorzugt einen isoelektrischen Punkt von 4 bis 6 auf.

Einen Einfluss auf die Stabilität der hergestellten Dispersion hat auch das Mengenverhältnis der Nanopartikel zu dem Gelatinehydrolysat in Schritt a). Besonders vorteilhaft ist es, wenn die Nanopartikel und das Gelatinehydrolysat in einem Gewichtsverhältnis von ca. 2:1 bis ca. 1:1,5 gemischt werden, jeweils bezogen auf die Trockenmasse. In welcher Konzentration die Nanopartikel in der anfänglichen Suspension bzw. in der hergestellten Dispersion vorliegen, richtet sich dabei in erster Linie nach der vorgesehenen Anwendung.

Die in Schritt b) hinzugefügte Lösung von Gelatine weist vorzugsweise eine Konzentration von ca. 5 bis ca. 20 Gew.% auf, wobei die Konzentration der Gelatine in der nach dem Hinzufügen resultierenden Dispersion bevorzugt ca. 1 bis ca. 10 Gew.% beträgt, weiter bevorzugt ca. 1 bis ca. 5 Gew.%. Diese Konzentration ist für eine Gelbildung ausreichend.

Die Nanopartikel weisen typischerweise eine Partikelgröße auf, die im Bereich von ca. 1 bis ca. 100 nm liegt. Bevorzugt sind dabei Nanopartikel am unteren Ende dieses Bereichs, insbesondere mit einer Partikelgröße von ca. 3 bis ca. 10 nm.

Die Nanopartikel, die in dem erfindungsgemäßen Verfahren eingesetzt werden, sind aus einem anorganischen Material gebildet. Besonders bevorzugt werden Nanopartikel aus Titandioxid eingesetzt, deren stabile Dispersion vielfältig verwendbar ist, oder auch Nanopartikel aus Aluminiumoxid, Siliziumdioxid, Zirkoniumdioxid, Indium-Zinn-Oxid (ITO), Zinkoxid, Zinksulfid, Molybdänsulfid oder Silber. Das erfindungsgemäße Verfahren ist jedoch nicht auf diese Materialien beschränkt.

Hinsichtlich der Bereitstellung einer stabilen Dispersion von Nanopartikeln wird die zugrunde liegende Aufgabe erfindungsgemäß dadurch gelöst, dass die Dispersion Wasser, Nanopartikel aus einem anorganischen Material, Gelatinehydrolysat und Gelatine umfasst. Die erfindungsgemäße Dispersion ist insbesondere eine Dispersion, die mit Hilfe des vorstehend beschriebenen erfindungsgemäßen Verfahrens hergestellt ist. Besondere Vorteile und bevorzugte Ausführungsformen der Dispersion wurden daher bereits im Zusammenhang mit dem Verfahren beschrieben.

Bei der erfindungsgemäßen stabilen Dispersion von Nanopartikeln handelt es sich vorzugsweise um eine Dispersion, bei der in einem Temperaturbereich von ca. -18 °C bis ca. 80 °C keine Koagulation der Nanopartikel erfolgt. Die Dispersion ist somit zum einen frostsicher und kann zum anderen auch auf Temperaturen deutlich oberhalb des Schmelzpunktes des Gelatinegels erwärmt werden, d.h. die Dispersion kann im Rahmen ihrer Weiterverarbeitung bzw. weiteren Verwendung wieder verflüssigt werden, ohne dass es zu einer Koagulation der Nanopartikel kommt.

Aufgrund ihrer vorteilhaften Eigenschaften lässt sich die erfindungsgemäße Dispersion auf vielfältige Weise verwenden. Eine bevorzugte Ausführungsform der Erfindung betrifft die Verwendung der erfindungsgemäßen stabilen Dispersion zur Herstellung von Nanopartikel enthaltenden Filmen, Folien oder Beschichtungen. Dabei wird die Dispersion erwärmt und in flüssiger Form auf eine zu beschichtende Oberfläche aufgebracht bzw. in eine entsprechende Form gegossen. Zuvor können selbstverständlich noch weitere Komponenten hinzugefügt werden.

Bei den hergestellten Beschichtungen kann es sich z.B. um Farben oder Lacke mit speziellen optischen Effekten handeln oder um Beschichtungen zur Erzeugung von selbstreinigenden Oberflächen. Filme und Folien können u.a. im Bereich der Optoelektronik (z.B. für Leuchtdioden, Flüssigkristallanzeigen oder Solarzellen) eingesetzt werden.

### Beispiele

Anhand der nachfolgenden Beispiele und Vergleichsbeispiele wird die Erfindung näher erläutert.

Die (Vergleichs-)beispiele 1 bis 4 wurden mit Nanopartikel aus Titandioxid mit einer mittleren Partikelgröße von ca. 10 nm durchgeführt. Diese Nanopartikel weisen einen IEP im Bereich von 5 bis 6 auf, sind bei sauren pH-Werten also positiv geladen (positives Zeta-Potential).

Die (Vergleichs-)beispiele 5 bis 11 wurden mit Nanopartikel aus Titandioxid mit einer mittleren Partikelgröße von ca. 100 nm durchgeführt, deren IEP ebenfalls im Bereich von 5 bis 6 liegt.

Die Beispiele 12 und 13 wurden mit Nanopartikeln aus Aluminiumoxid mit einer mittleren Partikelgröße von ca. 100 nm durchgeführt. Diese Nanopartikel weisen einen IEP im Bereich von 8 bis 9 auf, haben also im Vergleich zu den Nanopartikeln aus Titandioxid bei gleichem pH-Wert ein höheres positives Zeta-Potential.

### Vergleichsbeispiel 1

Die Titandioxid-Nanopartikel (ca. 10 nm) wurden in Form einer 20 Gew.%igen wässrigen Suspension mit einem pH-Wert von 1,5 bereitgestellt. 12 g dieser Suspension wurden mit 60 ml einer 1,5 Gew.%igen Gelatinelösung (Schweineschwartengelatine vom Typ A mit 290 g Bloom, einer Viskosität von 5,4 mPas und einem IEP von 9) bei 60 °C gemischt.

Es wurde ein starker Viskositätsanstieg und eine Koagulation der Nanopartikel beobachtet, die auf unerwünschte Wechselwirkungen zwischen den Partikeln und der Gelatine zurückzuführen ist.

### Beispiel 2

12 g der Suspension von Titandioxid-Nanopartikeln wie im Vergleichsbeispiel 1 wurden mit 55 g einer 9 Gew.%igen Lösung von Gelatinehydrolysat vom Typ A mit einem IEP von ca. 9 und einem mittleren Molekulargewicht von ca. 2.500 Da bei 60 °C gemischt. Es wurde eine Gelbfärbung der Mischung beobachtet, jedoch keine Koagulation der Nanopartikel.

Anschließend wurden 10 ml einer 10 Gew.%igen Gelatinelösung (Schweineschwartengelatine vom Typ A mit 290 g Bloom, einer Viskosität von 5,4 mPas und einem IEP von 9), ebenfalls mit einer Temperatur von 60 °C, hinzugefügt. Die Viskosität der Mischung stieg daraufhin deutlich an (die Mischung wies eine honigartige Konsistenz auf). Es erfolgte jedoch keine Koagulation der Nanopartikel.

Die resultierende Dispersion von Nanopartikeln wurde abgekühlt und erstarrte bei einer Temperatur von 25 °C zu einem Gel. Dieses ließ sich bei 40 °C wieder aufschmelzen und erstarrte beim Abkühlen erneut. Nach Temperierung des Gels bei 80 °C für 12 Stunden erstarrte die Dispersion bei 11 °C erneut und konnte bei 24 °C aufgeschmolzen werden.

Auch bei lichtmikroskopischer Betrachtung von gelierten Dünnschichtfilmen der Dispersion (100fach Vergrößerung) wurden keine Hinweise auf koagulierte Nanopartikel oder eine Phasenseparation gefunden. Die Filme waren vollständig homogen. Innerhalb eines Temperaturbereichs von -18 °C bis 80 °C kam es zu keiner Koagulation der Nanopartikel.

### Beispiel 3

Die verwendeten Nanopartikel und das Gelatinehydrolysat sowie die Durchführung des Verfahrens entsprechen dem Beispiel 2, mit der Ausnahme, dass an Stelle der Schweineschwartengelatine vom Typ A eine Gelatinemischung der Typen A und B mit 250 g Bloom, einer Viskosität von 3,5 mPas und einem IEP von 7 verwendet wurde.

Die resultierende Dispersion von Nanopartikeln erstarrte beim Abkühlen bei einer Temperatur von 19 °C zu einem Gel. Dieses ließ sich bei 33 °C wieder aufschmelzen. Nach Temperierung des Gels bei 60 °C für 12 Stunden erstarrte die Dispersion bei 16 °C erneut und konnte bei 29 °C aufgeschmolzen werden.

Auch in diesem Fall wurden bei lichtmikroskopischer Betrachtung von gelierten Dünnschichtfilmen keine Hinweise auf koagulierte Nanopartikel oder eine Phasenseparation gefunden. Innerhalb eines Temperaturbereichs von -18 °C bis 80 °C kam es zu keiner Koagulation der Nanopartikel.

### Vergleichsbeispiel 4

12 g der Suspension von Titandioxid-Nanopartikeln wie im Vergleichsbeispiel 1 wurden mit 55 g einer 9 Gew.%igen Lösung von Gelatinehydrolysat vom Typ B mit einem IEP von ca. 5 und einem mittleren Molekulargewicht von ca. 2.500 Da bei 60 °C gemischt.

Es wurde eine Koagulation der Nanopartikel beobachtet, da der IEP des Gelatinehydrolysats vom Typ B offensichtlich zu niedrig ist, was zu einem Ladungsausgleich an Stelle der erwünschten Erhöhung des Zeta-Potentials führt.

### Vergleichsbeispiel 5

Die Titandioxid-Nanopartikel (ca. 100 nm) wurden in Form einer 30 Gew.%-igen wässrigen Suspension mit einem pH-Wert von 7,3 bereitgestellt. 12 g dieser Suspension wurden mit 60 ml einer 1,5 Gew.%igen Gelatinelösung (Gelatinemischung der Typen A und B mit 250 g Bloom, einer Viskosität von 3,5 mPas und einem IEP von 7) bei 60 °C gemischt.

Es wurde eine Koagulation der Nanopartikel beobachtet, die auf unerwünschte Wechselwirkungen zwischen den Partikeln und der Gelatine zurückzuführen ist.

### Beispiel 6

12 g der Suspension von Titandioxid-Nanopartikeln wie im Vergleichsbeispiel 5 wurden mit 55 g einer 9 Gew.%igen Lösung von Gelatinehydrolysat vom Typ A mit einem IEP von ca. 9 und einem mittleren Molekulargewicht von ca. 2.500 Da bei 60 °C gemischt. Es wurde eine Gelbfärbung der Mischung beobachtet, jedoch keine Koagulation der Nanopartikel.

Anschließend wurden 10 ml einer 10 Gew.%igen Gelatinelösung (Schweineschwartengelatine vom Typ A mit 290 g Bloom, einer Viskosität von 5,4 mPas und einem IEP von 9), ebenfalls mit einer Temperatur von 60 °C, hinzugefügt. Die Viskosität der Mischung stieg daraufhin deutlich an (die Mischung wies eine honigartige Konsistenz auf). Es erfolgte jedoch keine Koagulation der Nanopartikel.

Es wurde eine makroskopisch und lichtmikroskopisch homogene Dispersion erhalten. Auch nach einer Temperierung bei 60 °C für 3 Stunden erfolgte keinerlei Koagulation.

### Beispiel 7

Die verwendeten Materialien und die Durchführung entsprechen dem Beispiel 6, mit der Ausnahme, dass 55 g einer nur 5 Gew.%igen Lösung des Gelatinehydrolysats eingesetzt wurden.

Es wurde eine makroskopisch homogene Dispersion erhalten, die jedoch im Lichtmikroskop (100fache Vergrößerung) inhomogener war als die Dispersion im Beispiel 6. Dies ist auf eine etwas schlechtere Stabilisierung aufgrund der im Verhältnis zu den Nanopartikeln geringeren Menge an Gelatinehydrolysat zurückzuführen.

### Beispiel 8

Die verwendeten Materialien und die Durchführung entsprechen den Beispielen 6 und 7, mit der Ausnahme, dass 55 g einer nur 2 Gew.%igen Lösung des Gelatinehydrolysats eingesetzt wurden.

Es wurde eine Koagulation der Nanopartikel beobachtet, was auf die zu geringe Menge an Gelatinehydrolysat zurückzuführen ist.

### Vergleichsbeispiel 9

12 g der Suspension von Titandioxid-Nanopartikeln wie im Vergleichsbeispiel 5 wurden mit 55 g einer 9 Gew.%igen Lösung von Gelatinehydrolysat vom Typ B mit einem IEP von ca. 5 und einem mittleren Molekulargewicht von ca. 2.500 Da bei 60 °C gemischt.

Es wurde eine Koagulation der Nanopartikel beobachtet, da der IEP des Gelatinehydrolysats vom Typ B offensichtlich zu niedrig ist, was zu einem Ladungsausgleich an Stelle der erwünschten Erhöhung des Zeta-Potentials führt.

### Beispiel 10

12 g der Suspension von Titandioxid-Nanopartikeln wie im Vergleichsbeispiel 5 wurden durch die Zugabe von Natronlauge zunächst auf einen pH-Wert von 9 eingestellt und dann mit 55 g einer 9 Gew.%igen Lösung von Gelatinehydrolysat vom Typ A mit einem IEP von ca. 9 und einem mittleren Molekulargewicht von ca. 2.500 Da bei 60 °C gemischt. Es wurde keine Koagulation der Nanopartikel beobachtet.

Anschließend wurden 10 ml einer 10 Gew.%igen Gelatinelösung (Gelatinemischung der Typen A und B mit 250 g Bloom, einer Viskosität von 3,5 mPas und einem IEP von 7), ebenfalls mit einer Temperatur von 60 °C, hinzugefügt.

Die resultierende Dispersion wurde abgekühlt und erstarrte zu einem Gel.

Unter dem Rasterelektronenmikroskop waren trotz der hohen Beladung der Oberfläche keine Agglomerate aus Titandioxid-Nanopartikeln sichtbar. Es zeigte sich vielmehr eine homogene Verteilung der einzelnen Partikel auch in den eingetrockneten Filmschichten. Parallel durchgeführte EDX-Messungen (energiedispersive Röntgen-Spektroskopie) an mehreren Stellen des Films zeigten zudem stets ein konstantes Verhältnis der Elemente. Insbesondere wurde stets ein konstantes Verhältnis von Titan aus den Nanopartikeln zum Kohlenstoff und zu den Spurenelementen Natrium und Kalium der Gelatinematrix gefunden.

### Beispiel 11

Die verwendeten Nanopartikel und die Gelatine sowie die Durchführung des Verfahrens entsprechen dem Beispiel 10, mit der Ausnahme, dass an Stelle des Gelatinehydrolysats vom Typ A ein Gelatinehydrolysat vom Typ B mit einem IEP von ca. 5 und einem mittleren Molekulargewicht von ca. 2.500 Da verwendet wurde.

Es wurde keine Koagulation der Nanopartikel beobachtet. Die resultierende Dispersion wurde abgekühlt und erstarrte zu einem Gel. Im Unterschied zum Vergleichsbeispiel 9 wird in diesem Fall aufgrund des erhöhten pH-Wertes eine Stabilisierung der Nanopartikel durch das Gelatinehydrolysat vom Typ B ermöglicht.

### Beispiel 12

Die Aluminiumoxid-Nanopartikel (ca. 100 nm) wurden in Form einer 40 Gew.%igen wässrigen Suspension mit einem pH-Wert von 4 bereitgestellt. 12 g dieser Suspension wurden mit 55 g einer 9 Gew.%igen Lösung von Gelatinehydrolysat vom Typ A mit einem IEP von ca. 9 und einem mittleren Molekulargewicht von ca. 2500 Da bei 60 °C gemischt. Es wurde eine milchige, opake Mischung erhalten, jedoch keine Koagulation der Nanopartikel beobachtet.

Anschließend wurden 10 ml einer 10 Gew.%igen Gelatinelösung (Gelatinemischung der Typen A und B mit 250 g Bloom, einer Viskosität von 3,5 mPas und einem IEP von 7), ebenfalls mit einer Temperatur von 60 °C, hinzugefügt.

Die resultierende Dispersion von Nanopartikeln erstarrte beim Abkühlen bei einer Temperatur von 17 °C zu einem Gel. Dieses ließ sich bei 30 °C wieder aufschmelzen. Nach Temperierung des Gels bei 60 °C für 12 Stunden erstarrte die Dispersion bei 15 °C erneut und konnte bei 27 °C aufgeschmolzen werden.

### Beispiel 13

Die verwendeten Nanopartikel und die Gelatine sowie die Durchführung des Verfahrens entsprechen dem Beispiel 12, mit der Ausnahme, dass an Stelle des Gelatinehydrolysats vom Typ A ein Gelatinehydrolysat vom Typ B mit einem IEP von ca. 5 und einem mittleren Molekulargewicht von ca. 2.500 Da verwendet wurde. Nach dessen Zugabe wurde auch hier eine milchige, opake Mischung erhalten, jedoch keine Koagulation der Nanopartikel beobachtet.

Die resultierende Dispersion von Nanopartikeln wurde abgekühlt und erstarrte zu einem Gel.

Aufgrund des höheren IEP der Aluminiumoxid-Nanopartikel im Vergleich zu den Titandioxid-Nanopartikeln können erstere auch durch das Gelatinehydrolysat vom Typ B mit einem niedrigeren IEP stabilisiert werden.

Die gemäß den vorstehenden Beispielen hergestellten stabilen Dispersionen von Nanopartikeln können u.a. zur Herstellung von Nanopartikel enthaltenden Filmen, Folien oder Beschichtungen verwendet werden, wobei die Dispersionen nach dem Aufschmelzen des Gelatinegels insbesondere mittels Gießen, Sprühen oder ähnlichen Verfahren verarbeitet werden können.

## Patentansprüche

1. Verfahren zur Herstellung einer stabilen Dispersion von Nanopartikeln, umfassend die in dieser Reihenfolge durchgeführten Schritte:
a) Mischen einer wässrigen Suspension von Nanopartikeln aus einem anorganischen Material mit einer wässrigen Lösung von Gelatinehydrolysat; und
b) Hinzufügen einer wässrigen Lösung von Gelatine zu der Mischung.

2. Verfahren nach Anspruch 1, wobei das Gelatinehydrolysat ein mittleres Molekulargewicht von 500 bis 9.000 Da aufweist, bevorzugt von 2.500 bis 5.000 Da.

3. Verfahren nach einem der vorangehenden Ansprüche, wobei der Schritt b) bei einer Temperatur von 40 bis 60 °C durchgeführt wird.

4. Verfahren nach einem der vorangehenden Ansprüche, wobei die Nanopartikel ein positives Zeta-Potential aufweisen und wobei das Gelatinehydrolysat ein Gelatinehydrolysat vom Typ A ist.

5. Verfahren nach einem der vorangehenden Ansprüche, wobei der isoelektrische Punkte der in Schritt b) eingesetzten Gelatine kleiner oder gleich dem isoelektrischen Punkt des in Schritt a) eingesetzten Gelatinehydrolysats ist.

6. Verfahren nach einem der vorangehenden Ansprüche, wobei die Gelatine eine Gelatine vom Typ A ist oder eine Mischung von Gelatinen der Typen A und B umfasst, und wobei die Gelatine bzw. Mischung einen isoelektrischen Punkt von 6 bis 10 aufweist, bevorzugt von 7 bis 9.

7. Verfahren nach einem der Ansprüche 1 bis 5, wobei die Gelatine eine Gelatine vom Typ B ist und einen isoelektrischen Punkt von 4 bis 6 aufweist.

8. Verfahren nach einem der vorangehenden Ansprüche, wobei die Nanopartikel und das Gelatinehydrolysat gemäß Schritt a) in einem Gewichtsverhältnis von 2:1 bis 1:1,5 gemischt werden, jeweils bezogen auf die Trockenmasse.

9. Verfahren nach einem der vorangehenden Ansprüche, wobei die in Schritt b) hinzugefügte Lösung von Gelatine eine Konzentration von 5 bis 20 Gew.% aufweist, und wobei die Konzentration der Gelatine in der nach dem Hinzufügen resultierenden Dispersion 1 bis 10 Gew.% beträgt, bevorzugt 1 bis 5 Gew.%

10. Verfahren nach einem der vorangehenden Ansprüche, wobei die Nanopartikel eine mittlere Partikelgröße im Bereich von 1 bis 100 nm aufweisen, bevorzugt im Bereich von 3 bis 10 nm.

11. Verfahren nach einem der vorangehenden Ansprüche, wobei die Nanopartikel aus Titandioxid, Aluminiumoxid, Siliziumdioxid, Zirkoniumdioxid, Indium-Zinn-Oxid, Zinkoxid, Zinksulfid, Molybdänsulfid oder Silber gebildet sind.

12. Stabile Dispersion von Nanopartikeln, umfassend Wasser, Nanopartikel aus einem anorganischen Material, Gelatinehydrolysat und Gelatine, wobei die Dispersion gemäß dem Verfahren nach einem der vorangehenden Ansprüche hergestellt ist.

13. Verwendung einer stabilen Dispersion nach Anspruch 12 zur Herstellung von Nanopartikel enthaltenden Filmen, Folien oder Beschichtungen.

## Claims

1. A method for producing a stable dispersion of nano-particles, comprising the steps carried out in this order:
a) mixing an aqueous suspension of nano-particles of an inorganic material with an aqueous solution of gelatine hydrolysate; and
b) adding an aqueous solution of gelatine to the mixture.

2. The method in accordance with claim 1, wherein the gelatine hydrolysate has an average molecular weight of 500 to 9,000 Da, preferably of 2,500 to 5,000 Da.

3. The method in accordance with any of the preceding claims, wherein the step b) is carried out at a temperature of 40 to 60 °C.

4. The method in accordance with any of the preceding claims, wherein the nano-particles exhibit a positive zeta potential and wherein the gelatine hydrolysate is a gelatine hydrolysate of the type A.

5. The method in accordance with any of the preceding claims, wherein the iso-electric point of the gelatine employed in step b) is smaller than or equal to the iso-electric point of the gelatine hydrolysate employed in step a).

6. The method in accordance with any of the preceding claims, wherein the gelatine is a gelatine of type A or comprises a mixture of gelatines of types A and B, and wherein the gelatine or the mixture has an iso-electric point of 6 to 10, preferably of 7 to 9.

7. The method in accordance with any of the claims 1 to 5, wherein the gelatine is a gelatine of type B and has an iso-electric point of 4 to 6.

8. The method in accordance with any of the preceding claims, wherein the nano-particles and the gelatine hydrolysate in accordance with step a) are mixed in a weight ratio of 2:1 to 1:1.5, in each case referring to the dry weight.

9. The method in accordance with any of the preceding claims, wherein the solution of gelatine added in step b) has a concentration of 5 to 20 weight-%, and wherein the concentration of the gelatine in the dispersion resulting from the addition process amounts to 1 to 10 weight-%, preferably to 1 to 5 weight-%.

10. The method in accordance with any of the preceding claims, wherein the nano-particles have an average particle size within the range of 1 to 100 nm, preferably within the range of 3 to 10 nm.

11. The method in accordance with any of the preceding claims, wherein the nano-particles are formed from titanium dioxide, aluminium oxide, silicon dioxide, zirconium dioxide, indium tin oxide (ITO), zinc oxide, zinc sulphide, molybdenum sulphide or silver.

12. A stable dispersion of nano-particles, comprising water, nano-particles of an inorganic material, gelatine hydrolysate and gelatine, wherein the dispersion is produced in accordance with the method of any of the preceding claims.

13. Use of a stable dispersion in accordance with claim 12 for producing films, foils or coatings containing nano-particles.

## Revendications

1. Procédé de fabrication d'une dispersion stable de nanoparticules, comprenant les étapes, réalisées dans cet ordre, consistant à :
a) mélanger une suspension aqueuse de nanoparticules d'un matériau inorganique avec une solution aqueuse d'hydrolysat de gélatine ; et
b) ajouter une solution aqueuse de gélatine au mélange.

2. Procédé selon la revendication 1, dans lequel l'hydrolysat de gélatine présente un poids moléculaire moyen de 500 à 9000 Da, de préférence de 2500 à 5000 Da.

3. Procédé selon l'une des revendications précédentes, dans lequel l'étape b) est réalisée à une température de 40 à 60 °C.

4. Procédé selon l'une des revendications précédentes, dans lequel les nanoparticules présentent un potentiel zêta positif et dans lequel l'hydrolysat de gélatine est un hydrolysat de gélatine de type A.

5. Procédé selon l'une des revendications précédentes, dans lequel le point isoélectrique de la gélatine utilisée à l'étape b) est inférieur ou égal au point isoélectrique de l'hydrolysat de gélatine utilisé à l'étape a).

6. Procédé selon l'une des revendications précédentes, dans lequel la gélatine est une gélatine de type A ou comprend un mélange de gélatines des types A et B, et dans lequel la gélatine et/ou le mélange présente un point isoélectrique de 6 à 10, de préférence de 7 à 9.

7. Procédé selon l'une des revendications 1 à 5, dans lequel la gélatine est une gélatine de type B et présente un point isoélectrique de 4 à 6.

8. Procédé selon l'une des revendications précédentes, dans lequel les nanoparticules et l'hydrolysat de gélatine selon l'étape a) sont mélangés en un rapport en poids de 2:1 à 1:1,5, respectivement par rapport à la matière sèche.

9. Procédé selon l'une des revendications précédentes, dans lequel la solution de gélatine ajoutée à l'étape b) présente une concentration de 5 à 20 % en poids, et dans lequel la concentration de la gélatine dans la dispersion résultant après l'addition est de 1 à 10 % en poids, de préférence 1 à 5 % en poids.

10. Procédé selon l'une des revendications précédentes, dans lequel les nanoparticules présentent une taille moyenne de particules dans la plage de 1 à 100 nm, de préférence dans la zone de 3 à 10 nm.

11. Procédé selon l'une des revendications précédentes, dans lequel les nanoparticules sont formées à partir de dioxyde de titane, d'oxyde d'aluminium, de dioxyde de silicium, de dioxyde de zirconium, d'oxyde d'étain-indium, d'oxyde de zinc, de sulfure de zinc, de sulfure de molybdène ou d'argent.

12. Dispersion stable de nanoparticules, comprenant de l'eau, des nanoparticules d'un matériau inorganique, de l'hydrolysat de gélatine et de la gélatine, la dispersion étant fabriquée d'après le procédé selon l'une des revendications précédentes.

13. Utilisation d'une dispersion stable selon la revendication 12 pour la fabrication de films, de feuilles ou de revêtements contenant des nanoparticules.
